# EUROPEAN PATENT APPLICATION

(11) **EP 4 597 736 A1**
(43) Date of publication of application: **06.08.2025**
(21) Application number: 23872460.3
(22) Date of filing: 27.09.2023
(51) Int. Cl.: H01M 50/533, H01G 11/74, H01M 50/559

(54) **POWER STORAGE DEVICE**

(30) Priority: 30.09.2022 JP 2022158327
(71) Applicant: Panasonic Intellectual Property Management Co., Ltd., Kadoma-shi, Osaka 571-0057 (JP)
(72) Inventor: SAKAMOTO, Shinichi, Kadoma-shi, Osaka 571-0057 (JP); KOZUKI, Kiyomi, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2023/035255
(87) International publication number: WO 2024/071238

(57) **Abstract**

A power storage device includes an electrode assembly where a positive electrode plate and a negative electrode plate are wound with a separator interposed between the positive electrode and negative electrode plates; and a positive electrode current collector joined to the positive electrode plate at an upper end of the electrode assembly in axial direction P. The positive electrode current collector includes a plate-shaped flange joined to the positive electrode plate at a face facing the positive electrode plate in axial direction P and a column with an adjustable length in axial direction P that protrudes from the flange toward an upper side in axial direction P.

## Description

### TECHNICAL FIELD

The present disclosure relates to a power storage device.

### BACKGROUND ART

A cylindrical battery, which is one type of power storage device, includes an electrode assembly in which a positive electrode plate and a negative electrode plate are wound with a separator interposed between the positive electrode and negative electrode plates. A large-diameter cylindrical battery may have a structure (hereinafter referred to as the end-face current collection structure) in which a positive electrode current collector is joined to a positive electrode core material-exposed part protruding from the electrode assembly (refer to, for example, PTL 1).

### CITATION LIST

### Patent Literature

PTL 1: Japanese Patent Application Laid-open No. 2005-203374

### SUMMARY OF THE INVENTION

With the above-mentioned end-face current collection structure, a steady high output can be expected. However, further performance improvement is necessary for the end-face current collection structure.

Therefore, the present disclosure aims to provide a higher-output power storage device.

A power storage device according to the present disclosure includes an electrode assembly where a first electrode plate and a second electrode plate are wound with a separator interposed between the first electrode plate and the second electrode plate; and a current collector joined to the first electrode plate at one axial end of the electrode assembly. The current collector includes a plate-shaped flange joined to the first electrode plate at a face facing the first electrode plate in an axial direction and a column with an adjustable axial length that protrudes from the flange toward one axial side.

The power storage device realized according to the present disclosure provides higher output.

### BRIEF DESCRIPTION OF THE DRAWINGS

FIG. 1 is a sectional view illustrating an exemplary power storage device according to an embodiment.
FIG. 2 is a perspective view illustrating a positive electrode current collector before assembly into the exemplary power storage device according to the embodiment.
FIG. 3 is a perspective view illustrating the positive electrode current collector after the assembly into the exemplary power storage device according to the embodiment.
FIG. 4 is a sectional view taken along line A-A of FIG. 2.
FIG. 5 is a perspective view illustrating another exemplary positive electrode current collector according to the embodiment.
FIG. 6 is a perspective view illustrating yet another exemplary positive electrode current collector according to the embodiment.
FIG. 7 is a flow diagram of a process of manufacturing the exemplary power storage device according to the embodiment.
FIG. 8 is a sectional view illustrating another exemplary power storage device according to the embodiment.

### DESCRIPTION OF EMBODIMENT

A detailed description is hereinafter provided of an exemplary embodiment of the present disclosure. In the following description, specific shapes, materials, directions, numerical values, and others are given as examples to facilitate understanding of the present disclosure and can be appropriately modified in accordance with applications, purposes, specifications, and others. Power Storage Device

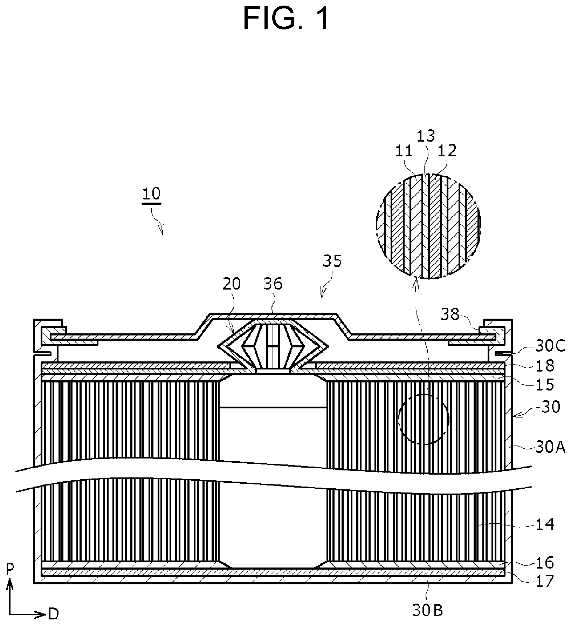

With reference to FIG. 1, a description of exemplary power storage device 10 according to the embodiment is provided. It is to be noted that the present disclosure is not limited to power storage device 10 and may encompass, among others, a capacitor that includes electrode assembly 14 in which positive electrode plate 11 and negative electrode plate 12 are wound with separator 13 interposed between positive electrode and negative electrode plates 11 and 12.

Power storage device 10 includes electrode assembly 14 in which strip-shaped positive electrode plate 11 serving as a strip-shaped first electrode plate and negative electrode plate 12 serving as a second electrode plate are wound with strip-shaped separator 13 interposed between positive electrode and negative electrode plates 11 and 12. Power storage device 10 can realize higher output, which will be described later in detail.

Power storage device 10 also includes, in addition to above-mentioned electrode assembly 14, an electrolyte (not illustrated), outer covering can 30 housing electrode assembly 14 and the electrolyte, and sealing member 35 closing an opening of outer covering can 30. The components are described below on the basis of axial directions P, radial directions D, and peripheral directions R of power storage device 10 (electrode assembly 14). A side of power storage device 10 in axial direction P, where sealing member 35 to be described later is provided, may be described as the upper side, and a side of power storage device 10, where bottom 30B of outer covering can 30 is located, may be described as the lower side.

Positive electrode plate 11 includes a strip-shaped positive electrode core material and a positive electrode mixture layer formed on at least one side of the positive electrode core material. The positive electrode core material used can be a foil of metal that is stable within a positive electrode potential range, such as aluminum or aluminum alloy, or a film with a surface layer of the metal. The positive electrode mixture layer contains a positive electrode active material, a conductive agent such as acetylene black, and a binding agent such as polyvinylidene fluoride and is formed, for example, on both sides of the positive electrode core material. The positive electrode active material used is, for example, a lithium transition metal composite oxide.

An upper end (widthwise end) of positive electrode plate 11 is protruding positive electrode core material-exposed part 15 where the positive electrode core material is not provided with the positive electrode mixture layer. On an upper side of electrode assembly 14, positive electrode current collector 20 to be described later in detail and upper insulating plate 18 disposed on positive electrode current collector 20 are provided. positive electrode current collector 20 is joined to positive electrode core material-exposed part 15 of positive electrode plate 11. In this way, positive electrode plate 11 and positive electrode current collector 20 are electrically connected. positive electrode current collector 20 is also joined to a bottom face of a central part of cap 36, thus being electrically connected to cap 36. This connection allows cap 36 to function as a positive external terminal. Upper insulating plate 18 prevents positive electrode plate 11 from contacting outer covering can 30.

Negative electrode plate 12 includes a strip-shaped negative electrode core material and a negative electrode mixture layer formed on at least one side of the negative electrode core material. The negative electrode core material used can be a foil of metal that is stable within a negative electrode potential range, such as copper, copper alloy, nickel, or nickel alloy, or a film with a surface layer of the metal. The negative electrode mixture layer contains a negative electrode active material and a binding agent such as styrene-butadiene rubber (SBR) and is formed, for example, on both sides of the negative electrode core material. The negative electrode active material used is, for example, graphite or a silicon-containing compound.

A lower end (widthwise end) of negative electrode plate 12 is protruding negative electrode core material-exposed part 16 where the negative electrode core material is not provided with the negative electrode mixture layer. On a lower side of electrode assembly 14, negative electrode current collector 17 is provided, and negative electrode core material-exposed part 16 is joined to negative electrode current collector 17. In this way, negative electrode plate 12 and negative electrode current collector 17 are electrically connected. Negative electrode current collector 17 is also joined to an inner face of bottom 30B of outer covering can 30, thus being electrically connected to outer covering can 30. This connection allows outer covering can 30 to function as a negative external terminal.

The electrolyte is a nonaqueous electrolyte that contains a nonaqueous solvent and an electrolyte salt dissolved in the nonaqueous solvent. Examples that may be used for the nonaqueous solvent include esters, ethers, nitriles, amides, and mixtures of two or more of these solvents, among others. The nonaqueous solvent may contain a halogen-substituted substance in which hydrogen atoms of the solvent are at least partly replaced with halogen atoms such as fluorine. Examples of the nonaqueous solvent include ethylene carbonate (EC), ethyl methyl carbonate (EMC), dimethyl carbonate (DMC), and mixtures of these solvents, among others. The electrolyte salt used is, for example, a lithium salt such as LiPF.

Outer covering can 30 is a bottomed cylindrical metal container with an open upper end, including cylindrically formed tube 30A and bottom 30B that is circular in a bottom view. Outer covering can 30 is generally made of an iron-based metal. However, outer covering can 30 may be made of an aluminum-based metal or the like, particularly when outer covering can 30 is electrically connected to positive electrode plate 11. When outer covering can 30 is iron-based, its iron surface may be plated with nickel or the like. Tube 30A of outer covering can 30 includes groove 30C formed in peripheral direction R of tube 30A. Groove 30C is located near the opening of outer covering can 30, specifically at a predetermined distance from an open marginal part (the upper end of outer covering can 30). The predetermined distance is, for example, a length corresponding to 1 to 20% of a length of outer covering can 30 in axial direction P.

In the present embodiment, a safety valve mechanism is provided at bottom 30B of outer covering can 30 to operate when an anomaly occurs in power storage device 10. Sealing member 35, on the other hand, is not provided with a safety valve mechanism. For example, bottom 30B is formed with a groove-shaped thin-walled part. When the anomaly in power storage device 10 increases internal pressure, bottom 30B is pushed outward relative to outer covering can 30, causing the thin-walled part to preferentially break and form a discharge port for gas in bottom 30B.

Groove 30C is where a part of tube 30A protrudes inward relative to outer covering can 30. For example, groove 30C is formed externally by subjecting tube 30A to spinning. Outer covering can 30 has a reduced diameter where groove 30C is formed, and groove 30C formed in an outer peripheral surface of tube 30A has the shape of a narrow line. Groove 30C has a substantially U-shaped section and is formed annularly along the entire length of tube 30A in peripheral direction R. Groove 30C is formed by machining tube 30A after electrode assembly 14 is housed in outer covering can 30.

Sealing member 35 includes cap 36 and gasket 38 and is generally disc-shaped. Sealing member 35 is disposed above groove 30C of outer covering can 30 and is secured in the opening of outer covering can 30. The open upper end is bent inward and crimped to sealing member 35 via gasket 38. In other words, sealing member 35 is secured to the upper end of outer covering can 30 by groove 30C and a crimped part of outer covering can 30, closing the opening of outer covering can 30. The crimped part is formed annularly in peripheral direction R of outer covering can 30, clamping sealing member 35 in association with groove 30C.

Cap 36 is a disc-shaped metal member and is exposed outside outer covering can 30, defining a top face of power storage device 10. A central part of cap 36 in radial direction D has a shape (bulge) protruding outward relative to power storage device 10. Wiring is connected to cap 36 when a plurality of power storage devices 10 are modularized to form a battery pack. Therefore, cap 36 functions as the external terminal of power storage device 10. In the present embodiment, positive electrode current collector 20 is electrically connected to cap 36, making cap 36 function as the positive external terminal.

Gasket 38 is provided along a periphery of cap 36. Gasket 38 is an annular resin or rubber member that prevents contact between cap 36 and outer covering can 30 to ensure insulation between outer covering can 30 and sealing member 35.

### Positive electrode Current Collector

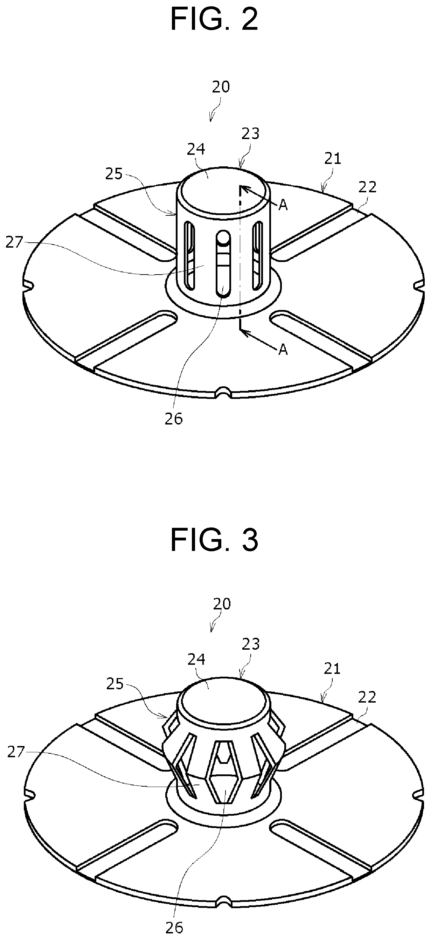

With reference to FIGS. 2 to 4, a description of exemplary positive electrode current collector 20 according to the embodiment is provided.

As described above, positive electrode current collector 20 is joined to the positive electrode core material of positive electrode plate 11 and the bottom face of the central part of cap 36, making cap 36 function as the positive external terminal. Furthermore, positive electrode current collector 20 has an adjustable length in axial direction P. This allows for a reduction in resistance of positive electrode current collector 20. Consequently, power storage device 10 can realize the higher output.

As illustrated in FIG. 2, positive electrode current collector 20 includes flange 21 joined to positive electrode core material-exposed part 15 of positive electrode plate 11 at a face facing positive electrode plate 11 (electrode assembly 14) in axial direction P and column 23 with an adjustable length in axial direction P that protrudes from flange 21 toward the upper side (cap 36) in axial direction P. FIG. 2 illustrates exemplary positive electrode current collector 20 before assembly into power storage device 10. After the assembly into power storage device 10, as illustrated in the example of FIG. 3, the length of column 23 in axial direction P is shortened, matching a length of a gap between electrode assembly 14 and cap 36.

Flange 21 is, for example, disc-shaped and has substantially the same diameter as electrode assembly 14 when viewed in axial direction P. Flange 21 includes a plurality of joining grooves 22 formed as second grooves in radial directions D. Joining grooves 22 are joined to positive electrode core material-exposed part 15, which is exposed from positive electrode plate 11. Joining grooves 22 are substantially V-shaped or U-shaped and protrudes toward electrode assembly 14 when viewed in radial direction D. The plurality of joining grooves 22 are arranged at intervals in peripheral direction R. In the example illustrated in FIG. 2, four joining grooves 22 are spaced 90° apart, extending radially from column 23. While joining grooves 22 extend in four directions in the present embodiment, joining grooves 22 may extend in one, two, three, or five or more directions. Flange 21 used in power storage device 10 of the present disclosure does not necessarily need to be disc-shaped and may be a rectangular plate.

Column 23 is provided at a center of flange 21 when viewed in axial direction P and is cylindrical, extending in axial direction P. Column 23 may be prism-shaped. Column 23 includes top panel 24 and tube 25 that will be described later in detail. After the assembly into power storage device 10, top panel 24 abuts and is welded to the bottom face of the central part of cap 36. Top panel 24 closes one end of tube 25 in axial direction P.

Tube 25 includes a plurality of slits 26 in a lateral surface. Slits 26 extend in axial direction P. Slits 26 may extend from near an upper edge of tube 25 to near a lower edge of tube 25 in axial direction P. Slits 26 are not particularly limited in number. It is to be noted here that sidewall 27 is defined between adjacent slits 26 of tube 25. Each sidewall 27 may have a greater width than slit 26. Tube 25 connects with flange 21 at an outer peripheral surface of an opposite end in axial direction P, and its opposite end may be open. This configuration allows for smoother deformation of column 23.
Furthermore, tube 25 is hollow and, therefore, can house sidewalls 27 to be described later when sidewalls 27 are bent inward in radial directions D.

When positive electrode current collector 20 having the above configuration is assembled into power storage device 10 (during pressing step S13 to be described later in detail), sidewalls 27 bend outward in radial directions D, causing the length of column 23 in axial direction P to shorten to match the length of the gap between electrode assembly 14 and cap 36.

Since positive electrode plate 11 and cap 36, which serves as the positive external terminal, are electrically connected solely by positive electrode current collector 20, positive electrode current collector 20 realizes the reduction in resistance between positive electrode plate 11 and cap 36, thus enabling power storage device 10 to realize the higher output.

Positive electrode current collector 20 can absorb variations in the gap between electrode assembly 14 and cap 36 of power storage device 10. In other words, the length of column 23 in axial direction P can be adjusted for each individual power storage device 10.

Positive electrode current collector 20 can be applied to power storage devices with different gaps between electrode assembly 14 and cap 36 (including, for example, power storage device 50 to be described later). In other words, positive electrode current collector 20 has improved versatility.

After positive electrode current collector 20 is assembled into power storage device 10, no gap is formed between positive electrode current collector 20 and cap 36, allowing for reduction of poor welding between positive electrode current collector 20 and cap 36. This enhances reliability of power storage device 10.

Since positive electrode current collector 20 is assembled without forming a gap with electrode assembly 14 as well as with cap 36, positive electrode current collector 20 is firmly secured and held in axial direction P of power storage device 10, thus enabling power storage device 10 to have improved vibration and impact resistance performance.

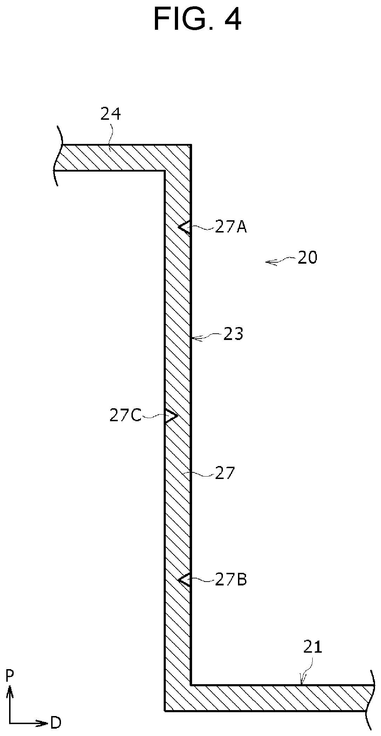

As illustrated in FIG. 4, an upper end of each sidewall 27 in axial direction P (that is at the same position in axial direction P as upper ends of adjacent slits 26 in axial direction P) includes upper groove 27A formed as a first groove in an outer peripheral surface. Furthermore, a lower end of each sidewall 27 in axial direction P (that is at the same position in axial direction P as lower ends of adjacent slits 26 in axial direction P) includes lower groove 27B formed as a first groove in an outer peripheral surface. Furthermore, a middle part of each sidewall 27 in axial direction P includes middle groove 27C formed as a first groove in an inner peripheral surface.

While upper and lower grooves 27A and 27B are formed in the outer peripheral surfaces in the present embodiment, this is not limiting. Upper and lower grooves 27A and 27B may be formed in inner peripheral surfaces. While middle groove 27C is formed in the inner peripheral surface in the present embodiment, this is not limiting. Middle groove 27C may be formed in an outer peripheral surface.

By being formed with upper groove 27A, lower groove 27B, and middle groove 27C, each sidewall 27 easily bends outward in radial direction D when cap 36 is pressed during the assembly of positive electrode current collector 20. The current collector of the present disclosure may include upper and lower grooves 27A and 27B formed in an inner surface of each sidewall 27 (of tube 25) and middle groove 27C formed in an outer surface of each sidewall 27 (of tube 25) to facilitate inward bending of each sidewall 27 in radial direction D.

### Other Exemplary positive electrode Current Collectors

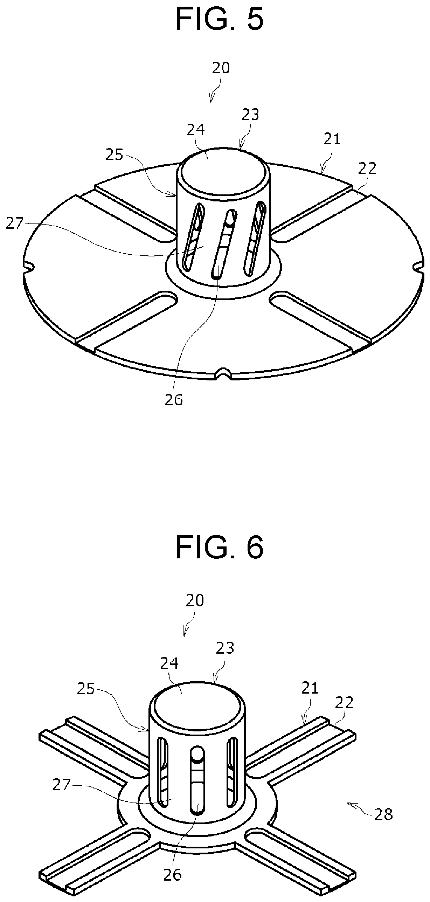

With reference to FIGS. 5 and 6, a description of other exemplary positive electrode current collectors 20 according to the embodiment is provided.

The other exemplary positive electrode current collectors 20 according to the embodiment are described below only for their differences from positive electrode current collector 20 described with reference to FIGS. 2 to 4 and are otherwise similar to above-described positive electrode current collector 20. Therefore, the similarities are not described.

Tube 25 of column 23 of positive electrode current collector 20 illustrated in FIG. 5 is formed with a plurality of slits 26. Slits 26 are inclined relative to axial direction P. An angle of inclination of each slit 26 relative to axial direction P may be greater than 0° and less than or equal to 30° . Such slits 26 can each have a long unit length in axial direction P compared to slits 26 extending in axial direction P. Furthermore, when column 23 is cylindrical, the plurality of inclined slits 26 formed in the outer peripheral surface of tube 25 can all have the same shape and be arranged in peripheral direction R. In this case, variations in the shape of sidewalls 27, which are each formed between a corresponding pair of slits 26, can also be minimized, and variations in bending conditions of sidewalls 27 can be reduced compared to when inclined slits 26 are formed in plane faces.

Positive electrode current collector 20 illustrated in FIG. 6 includes notches 28 formed in flange 21. Notches 28 of flange 21 are formed where joining grooves 22 are not present. This configuration facilitates movement of the electrolyte and the gas generated, for example, by electrolyte decomposition inside outer covering can 30.

### Process of Manufacturing Power Storage Device

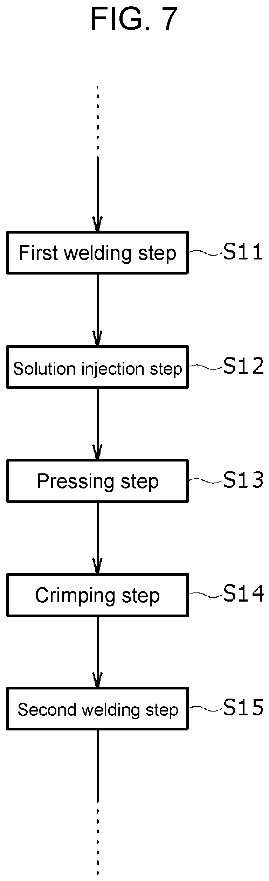

With reference to FIG. 7, a description is provided of a process of manufacturing exemplary power storage device 10 according to the embodiment.

The process of manufacturing power storage device 10 is the process of manufacturing above-described power storage device 10. A description is hereinafter provided of a process of assembling positive electrode current collector 20 into power storage device 10, and descriptions of other processes are omitted. The process of manufacturing power storage device 10 includes first welding step S11, solution injection step S12, pressing step S13, crimping step S14, and second welding step S15, all of which will be described later in detail.

In first welding step S11, positive electrode current collector 20 is disposed on the upper end of electrode assembly 14 in axial direction P, and positive electrode core material-exposed part 15, which protrudes from electrode assembly 14, is joined to joining grooves 22 of flange 21 of positive electrode current collector 20 by welding. At this time, positive electrode core material-exposed part 15 protruding from electrode assembly 14 may be bent inward in radial directions D and welded. In solution injection step S12, the electrolyte is injected into outer covering can 30 housing electrode assembly 14 and positive electrode current collector 20.

In pressing step S13, cap 36, with gasket 38 provided, is pressed toward positive electrode current collector 20 to close the opening of outer covering can 30. At this time, column 23 of positive electrode current collector 20 is pressed, and sidewalls 27 bend accordingly. Consequently, the length of column 23 in axial direction P is shortened, matching the length of the gap between electrode assembly 14 and cap 36.

In crimping step S14, the open end of outer covering can 30 is crimped, thereby securing cap 36 and gasket 38 in the opening of outer covering can 30. In second welding step S15, cap 36 and top panel 24 of column 23 of positive electrode current collector 20 are welded together.

### Another Exemplary Power Storage Device

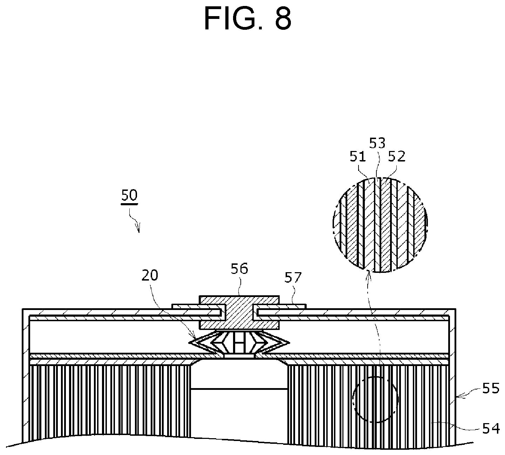

With reference to FIG. 8, a description of another exemplary power storage device 50 according to the embodiment is provided.

Power storage device 50 includes electrode assembly 54 in which strip-shaped positive electrode plate 51 serving as a first electrode plate and negative electrode plate 52 serving as a second electrode plate are wound with strip-shaped separator 53 interposed between positive electrode and negative electrode plates 51 and 52; an electrolyte (not illustrated); outer covering can 55 housing electrode assembly 54 and the electrolyte; rivet 56 serving as a positive external terminal; and above-described positive electrode current collector 20.

Rivet 56 is fixed at an opening formed in an upper end face of outer covering can 30 in axial direction P via insulating plate 57. positive electrode current collector 20 is joined to a bottom face of rivet 56 and positive electrode plate 51, with rivet 56 functioning as the positive external terminal. The bottom face of rivet 56 and positive electrode current collector 20 are welded together by inserting a welding tool through a through hole formed along an axis of electrode assembly 54, passing the welding tool through an opening of the opposite end of tube 25, and pressing the welding tool against an underside of top panel 24.

The present disclosure is not limited to the above-described embodiment and its modifications. Various changes and improvements can, of course, be made within the scope of the matters described in the claims of the present application. While the current collector of the present disclosure, which includes flange 21 and column 23, has been described as positive electrode current collector 20, the current collector of the present disclosure may be negative electrode current collector 17. Furthermore, column 23 of the current collector of the present disclosure may be joined to outer covering can 30.

### REFERENCE MARKS IN THE DRAWINGS

10, 50: power storage device
11, 51: positive electrode plate
12, 52: negative electrode plate
13, 53: separator
14, 54: electrode assembly
15: positive electrode core material-exposed part
16: negative electrode core material-exposed part
17: negative electrode current collector
18: upper insulating plate
20: positive electrode current collector
21: flange
22: joining groove (second groove)
23: column
24: top panel
25: tube
26: slit
27: sidewall
27A: upper groove (first groove)
27B: lower groove (first groove)
27C: middle groove (first groove)
28: notch
30, 55: outer covering can
30A: tube
30B: bottom
30C: groove
35: sealing member
36: cap
38: gasket
56: rivet
57: insulating plate

## Claims

1. A power storage device comprising:
an electrode assembly including a first electrode plate, a second electrode plate, and a separator, the first electrode plate and the second electrode plate being wound with the separator interposed between the first electrode plate and the second electrode plate; and
a current collector joined to the first electrode plate at one end of the electrode assembly along an axis of the electrode assembly, wherein
the current collector includes
a flange joined to the first electrode plate at a face facing the first electrode plate in a first direction along the axis, the flange being plate-shaped, and
a column with an adjustable axial length, the column protruding from the flange toward one axial side.

2. The power storage device according to claim 1, wherein
the column includes a tube that is cylindrical and a top panel closing one axial end of the tube, and
the tube connects with the flange at an opposite axial end.

3. The power storage device according to claim 2, wherein
the column includes a plurality of slits in a lateral surface,
the plurality of slits are arranged in a peripheral direction of the tube, and
the lateral surface of the column includes a sidewall being a remaining part between an adjacent pair of the plurality of slits, the axial length of the column is configured to be adjusted by bending the side wall.

4. The power storage device according to claim 3, wherein the plurality of slits extend axially.

5. The power storage device according to claim 3, wherein the plurality of slits are inclined and extend relative to an axial direction.

6. The power storage device according to any one of claims 3 to 5, wherein
the sidewall includes a first groove peripherally, and
the sidewall is bent along the first groove.

7. The power storage device according to claim 6, wherein the first groove is at both axial ends of the sidewall.

8. The power storage device according to claim 6, wherein the first groove is at an axially middle part of the sidewall.

9. The power storage device according to any one of claims 2 to 8, further comprising an external terminal, wherein
the top panel of the column is joined to the external terminal.

10. The power storage device according to any one of claims 2 to 7, wherein
the flange includes a second groove protruding radially, the second groove toward the first electrode plate, and
the second groove is joined to the first electrode plate.

11. The power storage device according to any one of claims 2 to 10, wherein the tube of the column includes an opening in an opposite end.
